(19) Europäisches Patentamt
European Patent Office
Office européen des brevets

(11) EP 2 566 032 B1

(12) EUROPEAN PATENT SPECIFICATION

(45) Date of publication and mention
of the grant of the patent:
**28.08.2019 Bulletin 2019/35**

(51) Int Cl.:
*H02M 7/48* *(2007.01)*     *H02P 27/06* *(2006.01)*
*H02M 1/32* *(2007.01)*

(21) Application number: **11775061.2**

(22) Date of filing: **27.04.2011**

(86) International application number:
**PCT/JP2011/060286**

(87) International publication number:
**WO 2011/136280 (03.11.2011 Gazette 2011/44)**

(54) **POWER CONVERSION DEVICE**

STROMWANDLER

DISPOSITIF DE CONVERSION DE PUISSANCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.04.2010 JP 2010102614**

(43) Date of publication of application:
**06.03.2013 Bulletin 2013/10**

(73) Proprietor: **Hitachi Automotive Systems, Ltd.**
**Hitachinaka-shi, Ibaraki 312-8503 (JP)**

(72) Inventors:
• **YAHATA, Koichi**
**Hitachinaka-shi**
**Ibaraki 312-8503 (JP)**
• **FUNABA, Seiji**
**Hitachinaka-shi**
**Ibaraki 312-8503 (JP)**
• **TSUJI, Masashige**
**Hitachinaka-shi**
**Ibaraki 312-8503 (JP)**

(74) Representative: **MERH-IP Matias Erny Reichl**
**Hoffmann**
**Patentanwälte PartG mbB**
**Paul-Heyse-Strasse 29**
**80336 München (DE)**

(56) References cited:
EP-A1- 2 284 982     EP-A2- 2 151 913
JP-A- 62 077 887     JP-A- 2000 316 283
JP-A- 2001 037 239     JP-A- 2005 229 689
JP-A- 2006 042 459     JP-A- 2009 247 185
US-A1- 2005 231 171     US-A1- 2007 274 109

## Description

TECHNICAL FIELD

The present invention relates to a power conversion device.

BACKGROUND ART

In an electric vehicle in which a power conversion device (inverter device) is installed, a battery with a voltage of 200 V to 400 V is used. A contactor is provided between the battery and the inverter device. When the inverter device operates, the contactor is turned on to connect the battery to the inverter device, and when the inverter device does not operate, the contactor is turned off to separate the battery from the inverter device.

The inverter device is provided with a smoothing capacitor, and if voltage remains in the inverter device after the contactor is turned off, there is a danger of touching the high voltage when the inverter device is repaired. Thus, in general, a discharge resistor is provided in the inverter device, and the electric charge remaining in the capacitor is discharged to 42 V or less in about 5 to 10 minutes. Incidentally, the value of 42 V represents such a voltage that even if a person touches the voltage, the degree of electrical shock is low, and the value is used as various standards.

However, a cover of the inverter device fixed by plural screws or the like can be physically opened within the discharge time of 5 to 10 minutes, and it is desirable that the electric charge of the capacitor is discharged within 30 seconds if possible. In order to discharge the electric charge of the capacitor within such a short time, for example, when electric charge remains in the capacitor of the inverter device with a voltage of 400V, the value of the discharge resistor is required to be 20 KΩ or less. However, for example, if the resistor is 20 kQ, power loss when a voltage of 400 V is applied is $V^2/R = 400^2/20000 = 8W$. Thus, when consideration is given to derating under high temperature environment, a large resistor with a rating of 30W is required to be used, and this is a high disadvantage for the inverter device which is required to be miniaturized.

Then, a method is proposed in which a rapid discharge circuit including a discharge resistor with a relatively low resistance and a semiconductor switch is provided, and when an inverter device is separated from a battery, the semiconductor switch is turned on and electric charge of a capacitor is rapidly discharged (see, for example, Patent Literature 1).

Furthermore, PTL 2 discloses a discharge circuit for a DC power supply smoothing capacitor that is used in a power conversion device that supplies DC power via a switch to the DC power supply smoothing capacitor and an inverter. The discharge circuit according to PTL 2 particularly has a resistor that discharges charge in the capacitor, a switch connected in series with the resistor that either passes or intercepts discharge current flowing from the capacitor to the resistor, a measurement circuit that measures a terminal voltage of the capacitor and a control circuit.

PTL 3 discloses a matrix converter capable of converting three-phase AC power input from a first motor-generator directly to three-phase AC power for driving a second motor-generator and outputting the resultant three-phase AC power, without rectifying the three-phase AC power generated by the first motor-generator once to DC power using a conventional three-phase full-wave rectification inverter.

PTL 4 discloses another power conversion apparatus capable of improving the impedance characteristics between each of two power modules and each of a plurality of capacitor cells.

CITATION LIST

PATENT LITERATURE

PTL 1: JP-A-2006-42459
PTL 2: EP 2 284 982 A1
PTL 3: US 2007/274109 A1
PTL 4: EP 2 151 913 A2

SUMMARY OF INVENTION

TECHNICAL PROBLEM

However, the rapid discharge circuit disclosed in Patent Literature 1 requires a high-voltage transistor as the discharge switch, a detection circuit to detect that a contactor is turned off, a contactor-off determination circuit to determine whether the contactor is actually turned off, and the like, and the circuit becomes complicated. Thus, there is a problem that the possibility of a failure becomes high by the complication of the circuit, and if the failure occurs, the rapid discharge can not be performed.

SOLUTION TO PROBLEM

According to a first aspect of the invention, a power conversion device according to claim 1 is provided. Other aspects of the invention are shown in the dependent claims.

ADVANTAGEOUS EFFECTS OF INVENTION

According to the invention, with respect to the discharge function of the voltage smoothing capacitor when the contactor is off, the reliability can be improved.

BRIEF DESCRIPTION OF DRAWINGS

[Fig. 1] A view showing a control block of a hybrid vehicle.
[Fig. 2] A view for explaining an inverter device 140.
[Fig. 3] A view for explaining a circuit structure of a driver power supply circuit 27.
[Fig. 4] A flowchart showing an example of a power consumption adjustment operation.
[Fig. 5] A view for explaining a structure of the inverter device 140.
[Fig. 6] A view for explaining a power supply circuit layout on a driver circuit board 17.
[Fig. 7] A view for explaining a circuit constant distribution.
[Fig. 8] A view for explaining a second embodiment.

DESCRIPTION OF EMBODIMENTS

Hereinafter, embodiments for carrying out the invention will be described with reference to the drawings.

-First Embodiment-

A power conversion device of an embodiment of the invention can be applied to a hybrid vehicle or a pure electric vehicle. In the following, as a typical example, a description will be made on a case where the power conversion device of the embodiment of the invention is applied to an inverter device of a hybrid vehicle. The power conversion device of the embodiment of the invention is used in an on-board power conversion device of an on-board electric system mounted on a vehicle, particularly in a vehicle driving electric system. The vehicle driving inverter device used in the vehicle driving electric system is under a very severe mount environment and operation environment.

The vehicle driving inverter device as a control device to control driving of a vehicle driving motor is provided in the vehicle driving electric system, converts DC power supplied from an on-board battery constituting an on-board power supply or an on-board generator into specified AC power, supplies the obtained AC power to the vehicle driving motor and controls the driving of the vehicle driving motor. Besides, since the vehicle driving motor has also a function as a generator, the vehicle driving inverter device has also a function to convert AC power generated by the vehicle driving motor into DC power. The converted DC power is supplied to the on-board battery.

Incidentally, although the structure of this embodiment is optimum as the vehicle driving power conversion device of a vehicle or a truck, the structure can be applied to a power conversion device other than these. For example, the structure can be applied also to a power conversion device of a train, a ship, an air plane or the like, an industrial power conversion device used as a control device of a motor to drive an equipment in a factory, or a home power conversion device used in a home solar generating system or used as a control device of a motor to drive a home electric appliance.

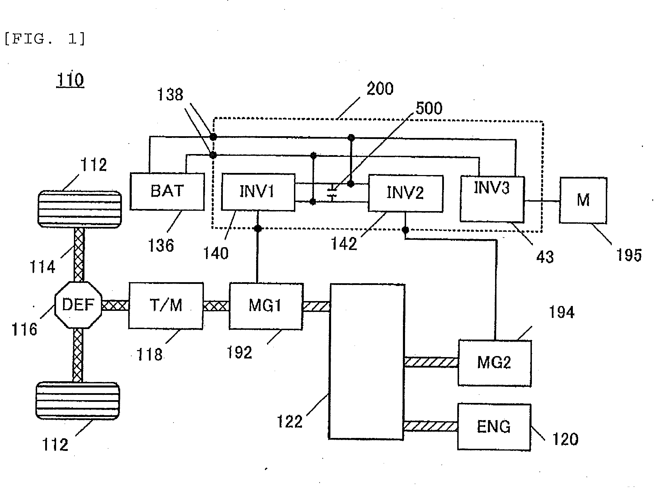

Fig. 1 is a view showing a control block of a hybrid vehicle. In Fig. 1, a hybrid electric vehicle (hereinafter referred to as "HEV") 110 is a kind of electric vehicle, and includes two vehicle driving systems. One of them is an engine system in which an engine 120 as an internal combustion engine is a motive power source. The engine system is mainly used as a driving source of the HEV 110. The other is an on-board electric system in which motor generators 192 and 194 are motive power sources. The on-board electric system is used mainly as a driving source of the HEV 110 and an electric power generating source of the HEV 110. The motor generator 192, 194 is, for example, a synchronous machine or an induction machine, and operates as a motor or a generator according to a driving method, and therefore, the word of the motor generator is used here.

A front axle 114 is rotatably supported in a front part of a vehicle body. A pair of front wheels 112 are provided at both ends of the front axle 114. A rear axle (not shown) is rotatably supported in a rear part of the vehicle body. A pair of rear wheels are provided at both ends of the rear axle. In the HEV of this embodiment, a so-call front-wheel-drive system is adopted in which a main wheel driven by motive power is the front wheel 112, and a driven wheel is the rear wheel. However, a system opposite to this, that is, a rear-wheel-drive system may be adopted.

A front wheel side differential gear (hereinafter referred to as a "front wheel side DEF") 116 is provided at the center of the front axle 114. The front axle 114 is mechanically connected to an output side of the front wheel side DEF 116. An output shaft of a transmission 118 is mechanically connected to an input side of the front wheel side DEF 116. The front wheel side DEF 116 is a differential power distribution mechanism that distributes rotational driving force transmitted through the transmission 118 to the right and left of the front axle 114. An output side of the motor generator 192 is mechanically connected to an input side of the transmission 118. An output side of the engine 120 and an output side of the motor generator 194 are mechanically connected to an input side of the motor generator 192 through a power distribution mechanism 122. Incidentally, the motor generators 192 and 194 and the power distribution mechanism 122 are contained in a housing of the transmission 118.

The motor generators 192 and 194 are synchronous machines including permanent magnets in rotators. AC power to be supplied to armature windings of stators is controlled by inverter devices 140 and 142, so that driving of the motor generators 192 and 194 is controlled. A battery 136 is connected to the inverter devices 140 and 142, and electric power can be transferred between the battery 136 and the inverter devices 140 and 142.

In this embodiment, the HEV 110 includes two electric motor generator units, that is, a first electric motor generator unit including the motor generator 192 and the inverter device 140 and a second electric motor generator unit including the motor generator 194 and the inverter device 142, and selectively uses those according to the operation state. That is, when the drive torque of the vehicle is assisted in a state where the vehicle is driven by motive power from the engine 120, the second electric motor generator unit is activated as a power generation unit by the motive power of the engine 120 so that electric power is generated, and the first electric motor generator unit is activated as an electric unit by the electric power obtained by the power generation. Besides, when the speed of the vehicle is assisted in a similar situation, the first electric motor generator unit is activated as a power generation unit by the motive power of the engine 120 so that electric power is generated, and the second electric motor generator unit is activated as an electric unit by the electric power obtained by the power generation.

Besides, in this embodiment, the first electric motor generator unit is activated as an electric unit by electric power of the battery 136, so that the vehicle can be driven only by motive power of the motor generator 192. Further, in this embodiment, the first electric motor generator unit or the second electric motor generator unit is activated as a power generation unit by the motive power of the engine 120 or motive power from the wheels so as to generate electric power, so that the battery 136 can be charged.

The battery 136 is also used as a power supply for driving a motor 195 for an auxiliary machine. The auxiliary machine is, for example, a motor to drive a compressor of an air conditioner or a motor to drive a hydraulic pump for control. DC power supplied from the battery 136 to an inverter device 43 is converted into AC power by the inverter device 43, and is supplied to the motor 195. The inverter device 43 has the same function as that of the inverter devices 140 and 142, and controls the phase, frequency and electric power of alternating current to be supplied to the motor 195. For example, the motor 195 generates torque by supplying leading phase AC power with respect to rotation of the rotator of the motor 195. On the other hand, the motor 195 operates as a generator by generating lagging phase AC power, and the motor 195 operates in a regenerative braking state. The control function of the inverter 43 as stated above is the same as the control function of the inverter devices 140 and 142. Since the capacity of the motor 195 is less than the capacity of the motor generators 192 and 194, the maximum conversion electric power of the inverter 43 is less than that of the inverter devices 140 and 142. However, the circuit structure of the inverter device 43 is basically the same as that of the circuit structure of the inverter devices 140 and 142.

The inverter devices 140, 142 and 43 and a capacitor 500 are in an electrically close relationship. Further, they are common in requiring measures against heat generation. Besides, the volume of the device is desired to be made as small as possible. From these points, a power conversion device 200 described below in detail incorporates the inverter devices 140, 142 and 43 and the capacitor 500 in a housing of the power conversion device 200. By this structure, the small and highly reliable device can be realized.

Besides, incorporating the inverter devices 140, 142 and 43 and the capacitor 500 in the one housing is effective in simplification of wiring and measures against noise. Besides, inductance of a connection circuit of the capacitor 500 and the inverter devices 140, 142 and 43 can be reduced, spike voltage can be reduced, and reduction in heat generation and improvement in heat radiation efficiency can be realized.

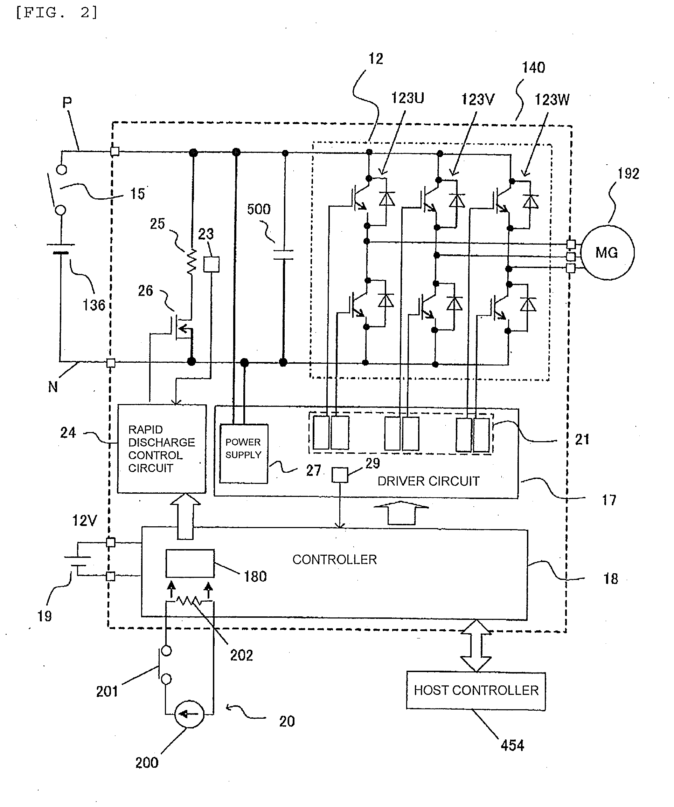

Next, a discharge function in this embodiment will be described with reference to Fig. 2. Here, a description will be made while the inverter device 140 is used as a typical example. Fig. 2 is a view for explaining a circuit structure of the inverter device 140, and the voltage smoothing capacitor 500 is also shown. The inverter device 140 converts DC voltage from the battery 136 into AC voltage and drives the motor generator 192. Connection and separation between the inverter device 140 and the battery 136 is controlled by a contactor 15. The inverter device 140 includes an inverter circuit 12, a driver circuit board 17, a controller 18, a rapid discharge control circuit 24, a rapid discharge resistor 25, and a discharging switching element 26. The driver circuit board 17 is provided with driver circuits 21 for driving the inverter circuit 12, and a driver power supply circuit 27 for supplying electric power to the driver circuits 21.

The inverter circuit 12 includes power semiconductor elements for electric power constituting a three-phase bridge configuration, and upper and lower arm series circuits 123U, 123V and 123W each including two power semiconductor elements are provided to correspond to a U-phase, a V-phase and a W-phase. The upper and lower arm series circuits 123U, 123V and 123W are respectively electrically connected to a positive line P and a negative line N. The voltage smoothing capacitor 500 is connected in parallel to the battery 136, and supplies voltage to the inverter circuit 12 through the contactor 15 provided in series between the battery 136 and the capacitor 500. The opening and closing of the contactor 15 is controlled by a host controller 454 such as an engine controller or a battery controller, and for example, in the HEV, the contactor is operated by a contactor opening and closing signal from the host controller 454 in coordination with an engine start and stop operation.

The respective power semiconductor elements provided in the inverter circuit 12 are driven and controlled by the driver circuits 21. The driver circuits 21 for six phases are provided on the driver circuit board 17 in order to drive and control the respective power semiconductor elements in the three-phase bridge configuration. An insulated power supply is supplied to each of the driver circuits 21 by the driver power supply circuit 27. Electric power is supplied to the driver power supply circuit 27 from the battery 136 which is a high voltage power supply. On the other hand, electric power is supplied to the controller 18 from a 12V power supply 19. Incidentally, in the case of the battery 136 for an electric vehicle, the battery with a voltage of 200V to 400V is used.

The driver circuits 21 perform switching control of the power semiconductor elements of the inverter circuit 12 based on control signals (PWM signals) from the controller 18. A target torque value and a command for driving the motor generation 192, such as a rotation command, are inputted to the controller 18 from the host controller 454. Besides, a current value to be supplied to the armature windings of the motor generator 192, which is detected by a not-shown current sensor, and a magnetic pole position outputted from a not-shown rotary magnetic pole sensor provided in the motor generator 192 are inputted to the controller 18.

The controller 18 includes a microcomputer for calculating the switching timing of the power semiconductor elements. The microcomputer calculates current command values in the d-axis and q-axis of the motor generator 192 based on the target torque value, and calculates voltage command values in the d-axis and q-axis based on the difference between the calculated current command values in the d-axis and q-axis and the current values in the d-axis and q-axis based on the detection result of the current sensor. The calculated voltage command values in the d-axis and q-axis are converted into voltage command values of U-phase, V-phase and W-phase based on the detected magnetic pole positions. Further, a pulse modulation wave is generated on the basis of a comparison between a fundamental base wave (sine wave) based on the voltage command values of the U-phase, the V-phase and the W-phase and a carrier wave (triangular wave), and the generated modulation wave is outputted as a PWM (Pulse Width Modulation) signal to the driver circuit 21.

When the lower arm is driven, the driver circuit 21 insulates and amplifies the lower arm PWM signal, and outputs this as a drive signal to the gate electrode of the power semiconductor element of the lower arm. Similarly, when the upper arm is driven, the upper arm PWM signal is insulated an amplified, and this is outputted as a drive signal to the gate electrode of the power semiconductor element of the upper arm. By this, the respective power semiconductor elements perform the switching operations based on the inputted drive signals.

In this embodiment, the series circuit of the rapid discharge resistor 25 and the discharging switching element 26 is provided in parallel to the battery 136 and the voltage smoothing capacitor 500. The on and off of the discharging switching element 26 is controlled by the rapid discharge control circuit 24. When the vehicle is stopped and a key-off operation is performed, the contactor 15 is opened by the host controller 454, and the battery 136 and the inverter device 140 are separated.

Here, after the inverter device 140 is separated from the battery 136, if voltage remains in the inverter, there is a danger of touching the high voltage when, for example, the inverter device 140 is repaired. Thus, the rapid discharge control circuit 24 turns on (conductive state) the discharging switching element 26, and discharges the electric charge remaining in the capacitor 500. Incidentally, a relatively low resistor is used as the rapid discharge resistor 25 so that the discharge is rapidly performed.

Besides, also when a cover provided on the housing of the inverter device 140 is opened for repair or the like, there is a fear of electric shock, and accordingly, an interlock loop 20 is provided in order to prevent that. A current source 200, a switch 201 to be opened when the cover of the housing is opened, and a resistor 202 for detecting that the interlock loop 20 is opened are provided on wiring of the interlock loop 20 shown in Fig. 2. Although not shown, the wiring of the interlock loop 20 goes through other high-voltage devices (the battery 136, not-shown DC-DC converter, etc.), and switches for interlock are respectively provided.

When one of the switches is opened and the interlock loop 20 is opened, potential difference between both ends of the resistor 202 becomes zero. A detection circuit 180 provided in the controller 18 detects the potential difference of the resistor 202. If the potential difference detected by the detection circuit 180 becomes zero, the controller 18 determines that the interlock loop 20 is opened, and outputs a signal requesting contactor opening to the host controller 454. When receiving the signal from the controller 18, the host controller 454 opens the contactor 15.

On the other hand, after outputting the signal requesting the contactor opening, the controller 18 outputs a discharge command to the rapid discharge control circuit 24. When receiving the discharge command from the controller 18, the rapid discharge control circuit 24 turns on (conductive state) the discharging switching element 26, and discharges the electric charge of the capacitor 500 through the rapid discharge resistor 25.

Incidentally, with respect to a structure of the rapid discharge control circuit 24, for example, a structure as disclosed in the Patent Literature 1 is adopted. Here, a description of a detailed structure of the rapid discharge control circuit 24 will be omitted.

In this embodiment, a discharge function using the driver circuit board 17 is added in order to further improve the reliability of discharge control. That is, the electric charge of the capacitor 500 is discharged by the driver circuit 21 and the like. Thus, although the 12V power supply 19 is used as the power supply of the driver power supply circuit 27 in the related art inverter device, in this embodiment, as described above, the battery 136 is used as the power supply of the driver power supply circuit 27.

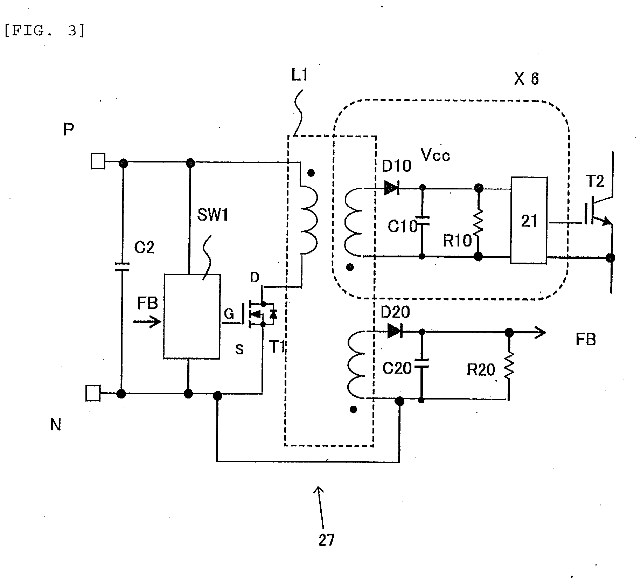

Fig. 3 is a view for explaining a circuit structure of the driver power supply circuit 27. The driver power supply circuit 27 includes a flyback power supply, and is provided with seven secondary side circuits in total, including six output circuits and one feedback circuit. Incidentally, Fig. 3 shows the output circuit for only one phase.

In Fig. 3, C2 denotes an input filter capacitor of the power supply circuit, L1 denotes a power supply transformer, T1 denotes a switching transistor connected to the power supply transformer L1, and SW1 denotes a switching regulator control circuit to drive the switching transistor T1 while feedback control is performed so that a secondary side voltage becomes a constant voltage. When a voltage is applied to the driver power supply circuit 27, the switching regulator control circuit SW1 starts to drive the switching transistor T1. Resistors R10 and R20 are resistors for consuming electric power when the electric charge of the capacitor 500 is discharged.

A secondary side output includes a diode D10 and a capacitor C10, and the driver circuit 21 is disposed at a latter stage where the voltage is smoothed. The driver circuit 21 drives a power semiconductor element T2. The power semiconductor element T2 is one of the six power semiconductor elements provided in the inverter circuit 12 shown in Fig. 2.

The driver power supply circuit 27 can operate at operation voltages from 30V to the maximum voltage of the battery 136 or from 30V to the maximum induced voltage of the motor generator 192. The reason why the maximum operation voltage of the driver power supply circuit 27 is the maximum voltage of the battery 136 or the maximum induced voltage of the motor generator 192 is as described below. That is, when the motor generator 192 rotates in a state where the 12V power supply 19 is off, the controller 18 does not operate, and the contactor 15 is off, the induced voltage of the motor generator 192 is applied to the capacitor 500 via the diode in the inverter circuit 12, and there is a fear that the peak voltage of the induced voltage of the motor generator 192 is applied to the capacitor 500.

Thus, the driver power supply circuit 27 is designed to be capable of operating even if the DC voltage equal to the peak voltage of the induced voltage of the motor generator 192 is applied. In the example of this embodiment, since the induced voltage of the motor generator 192 becomes 600V at maximum, the driver power supply circuit 27 is designed to be capable of operating even if the DC voltage of 600V is applied.

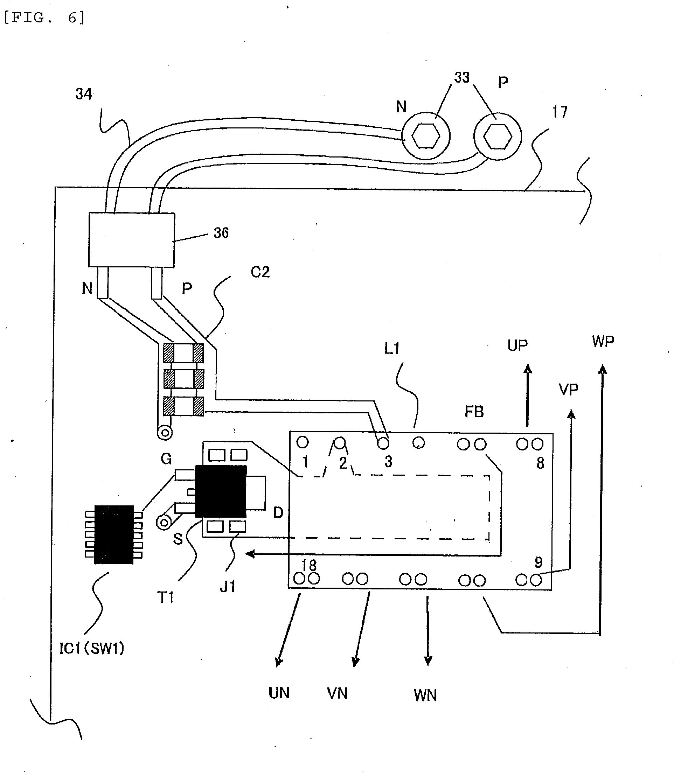

In this embodiment, as shown in Fig. 2, the input of the driver power supply circuit 27 is taken from the high voltage side (PN line), so that, even if switching by the driver circuit 21 is not performed, the electric charge of the capacitor 500 is discharged by power consumption of the driver power supply circuit 27 itself (the resistors R10 and R20 shown in Fig. 3, an after-mentioned control IC1 of Fig. 6, etc.).

Next, power consumption in the driver circuit board 17 and discharge time will be described. Here, the voltage of the capacitor 500 at the time of start of discharge is assumed to be 350V, and the time required to decrease the voltage of 350V to 42V or less is regarded as the discharge time. The voltage of 42V here is such a voltage that the electric shock due to human contact is low, and the voltage is used for various standards. The target discharge time is set to be 30 seconds or less. The reason why 30 seconds or less is set is that the vehicle inverter device is generally hermetically closed by plural screws, and if the discharge time is regulated by the shortest time required to take off the plural screws, the shortest time is about 30 seconds.

The discharge time by the power consumption in the driver circuit board 17 is determined by the capacitance of the capacitor 500, the voltage value applied to the driver power supply circuit 27, and the power consumption in the driver circuit board 17. In the driver circuit board 17 in this embodiment, in the state where the driver circuit 21 does not switch the power semiconductor element T2, the power consumption is about 2W. The capacitor 500 with a capacitance of 1000 $\mu$F could not be discharged by such a degree of loss from the voltage of 350V to the voltage of 42V within 30 seconds.

Then, as shown in Fig. 3, the resistors R10 and R20 are provided in the secondary side circuit of the driver power supply circuit 27, so that the power consumption in the driver circuit board 17 is intentionally increased, and the discharge time is shortened. Further, the resistance values of the resistors R10 and R20 are reduced and the power consumption is further increased, so that the discharge can be performed to the voltage of 42V within 30 seconds.

However, in the method of using the loss by the resistors R10 and R20, electric power is consumed also in the normal inverter operation. Then, the power consumption in the driver circuit board 17 may be increased by a method as described below. When the driver circuit 21 performs the switching operation, the power consumption increases as compared with a case where the driver circuit does not perform the switching operation. For example, in a state where the driver circuit 21 receives a PWM command from the controller 18 and performs switching at a frequency of about 12 kHz, the loss is about 8W.

Then, the controller 18 is made to have a self shut-off function, and even after the contactor 15 is turned off, the controller 18 is operated for a while. A PWM signal to cause the motor generator 192 to be kept in a non-energization state is instructed from the controller 18 to the driver circuit 21. Since the non-energization PWM switching operation as stated above is performed to increase the power consumption of the driver circuit 21, even if the resistors R10 and R20 as shown in Fig. 3 are not provided, the discharge time can be shortened to 30 seconds or less.

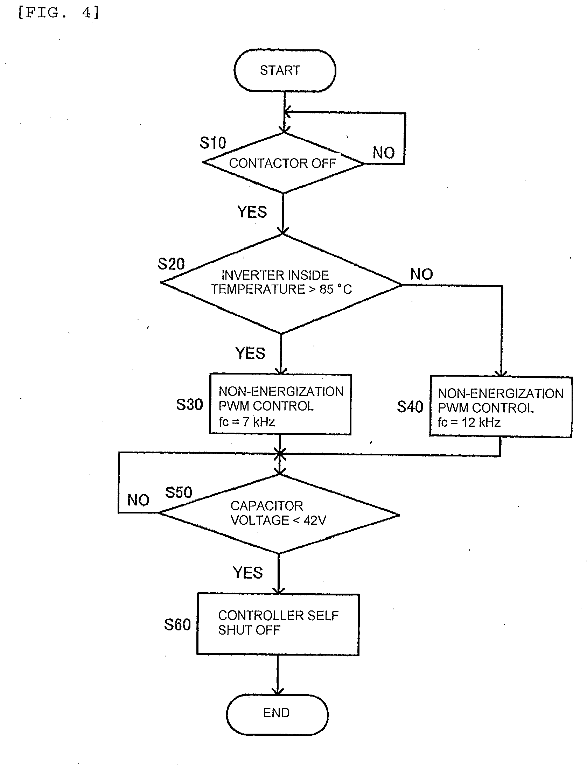

The magnitude of the power consumption at the time of the non-energization PWM switching operation depends on the carrier frequency of the PWM signal, and as the carrier frequency becomes high, the power consumption becomes large. That is, the carrier frequency of the PWM signal is changed to adjust the power consumption of the driver circuit 21, so that the discharge time can be adjusted. Fig. 4 shows an example of such power consumption adjustment, and is a flowchart showing an operation in a case where the carrier frequency is changed according to the inner temperature of the inverter device 140.

The controller 18 is provided with temperature information relating to the inverter device 140, for example, a temperature sensor 29 to detect the temperature of the driver circuit 21 is provided as shown in Fig. 2, and a detection signal of the temperature sensor 29 is inputted as the temperature information to the controller 18. The controller 18 changes the carrier frequency of the PWM signal based on the temperature information. First, at step S10 of Fig. 4, it is determined whether or not the contactor 15 is turned off.

For example, when the contactor 15 is turned off by a key-off operation and by the host controller 454, a contactor-off command is inputted from the host controller 454 to the controller 18. Whether the contactor 15 is turned off is determined based on whether the controller 18 receives the contactor-off command. Besides, if the controller 18 determines that the interlock loop 20 is opened by opening of the cover of the inverter device 140 or the like, the controller 18 outputs the determination result to the host controller 454 . The controller 18 determines, based on the determination result, whether or not the contactor 15 is turned off.

When it is determined at step S10 that the contactor 15 is turned off, advance is made to step S20, and it is determined whether or not the detected temperature (inverter inside temperature) of the temperature sensor 29 exceeds a specified temperature (here, the specified temperature = 85°C). The specified temperature is suitably set, for example, temperature allowed for the switching transistor T1 is used.

If it is determined at step S20 that the inverter inside temperature exceeds 85°C, advance is made to step S30, and if determined that the temperature does not exceed 85°C, advance is made to step S40. If advance is made from step S20 to step S40, in order to enable discharge to be performed to the voltage of 42V within 30 seconds, the carrier frequency fc of the PWM signal is set to fc = 12 kHz, and the non-energization PWM control switching operation is performed by the driver circuit 21. On the other hand, if advance is made from step S20 to step S30, in order to suppress heat generation of the power semiconductor element, the carrier frequency fc is set to fc = 7 kHz, and the non-energization PWM control switching operation is performed by the driver circuit 21. In this case, the discharge time is extended.

Incidentally, the non-energization PWM switching operation is such a control that current does not flow through the power semiconductor element (that is, current does not flow through the motor generator 192 as a load) . For example, when control is performed to cause the power semiconductor element on the upper arm side to perform the switching operation in the state where the power semiconductor element on the lower arm side of Fig. 2 is off, switching can be performed while current does not flow through the power semiconductor element.

At step S50, it is determined whether or not the voltage of the capacitor 500 is lower than 42V, and if the voltage of the capacitor 500 is lower than 42V, advance is made to step S60. Incidentally, although not shown in Fig. 2, a voltage detection circuit for detecting the voltage of the capacitor 500 is provided in parallel to the voltage smoothing capacitor 500. At step S60, the power supply of the controller 18 is self shut off.

As stated above, if the inverter inside temperature is high and there is a fear that the temperature of the driver circuit 21 or the switching transistor T1 of the driver power supply circuit 27 exceeds the allowable temperature by performing the non-generation PWM switching, the carrier frequency is set to be low. On the other hand, if the inverter inside temperature is low and the temperature of the component, such as the driver circuit 21 or the switching transistor T1, is sufficiently low, the carrier frequency of the non-energization PWM switching is made high, so that the capacitor electric charge can be discharged at a higher speed. Incidentally, the temperature information here may be the temperature information of cooling water flowing through the inverter device, the temperature information of the power semiconductor element, which is almost equal to water temperature at the time of stop of the operation, or the like in addition to the inverter inside temperature.

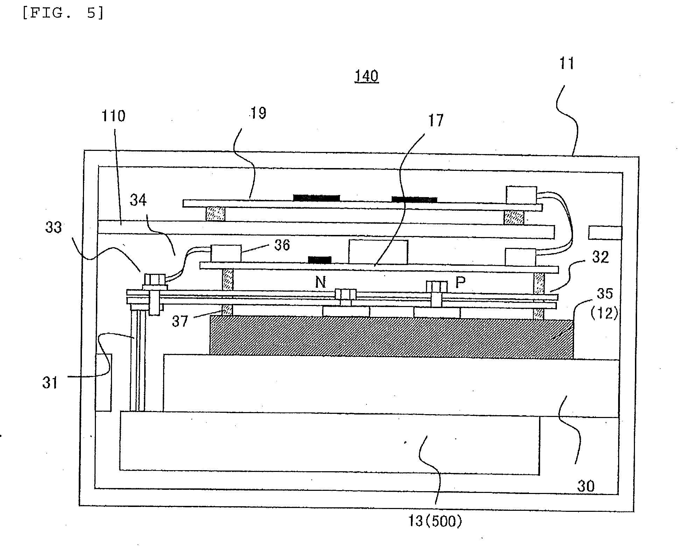

Next, a structure of the inverter device of the invention will be described with reference to Fig. 5. The inverter device 140 is contained in a housing 11 as shown in Fig. 5. Components (power semiconductor element etc.) constituting the inverter circuit 12 is made in one module, and a semiconductor module 35 is fixed to a cooling block 30 in which a cooling flow path is formed. The voltage smoothing capacitor 500 is contained in a container 13, and is fixed to the cooling block 30.

A bus bar 31 is integrated with a main body of the capacitor 500, and is connected to the inverter circuit 12 of the semiconductor module 35 through a laminate bus bar 32 arranged above the semiconductor module 35. The driver circuit board 17 arranged above the laminate bas bar 32 is fixed to the cooling block 30 through a support 37. A control circuit board 19 is mounted with components constituting the controller 18, and is mounted on a metal plate 110 provided in the housing 11. The power supply of the driver circuit board 17 is inputted to the driver circuit board 17 through a power supply harness 34 from a connection part 33 for connecting the capacitor bus bar 31 and the laminate bus bar 32.

Here, the reason why the power supply is inputted not from the PN terminal of the semiconductor module 35 but from the connection part 33 between the capacitor bus bar 31 and the laminate bus bar 32 by using the power supply harness 34 is that a place farther from the PN terminal of the semiconductor module 35 is less influenced by the current flowing into the semiconductor module 35 and the voltage is stable, and the assembling of the harness 34 into the housing 11 can be easily performed.

Fig. 6 is a view for explaining a power supply circuit layout on the driver circuit board 17. The power supply harness 34 connects the connection part 33 between the capacitor bus bar 31 and the laminate bus bar 32 to a power supply connector 36 of the driver circuit board 17. A power supply wiring is connected to a third pin of the power supply transformer L1 via the power supply input capacitor C2 from a P terminal of the power supply connector 36. Then, the power supply wiring is connected from the third pin of the power supply transformer L1 to a second pin via a primary side wiring of the power supply transformer, and is further connected from the second pin to a drain terminal of the switching transistor T1 via a drain (D) pattern of the switching transistor T1.

On the other hand, an N terminal of the connector 36 is connected to a source terminal of the switching transistor T1 via the capacitor C2 and a not-shown primary current detection resistor. IC1 denotes a control IC as a component of the switching regulator control circuit SW1, and the control IC drives the gate of the switching transistor T1 and controls switching of the switching transistor T1. UP, VP, WP, UN, VN and WN outputted from the power supply transformer L1 are six-phase insulated power supply outputs of the driver circuits 21, and are wired to the driver circuits 21 of the respective phases . FB is an output to a feedback phase, and the potential thereof is equal to that of the N terminal and the control IC1.

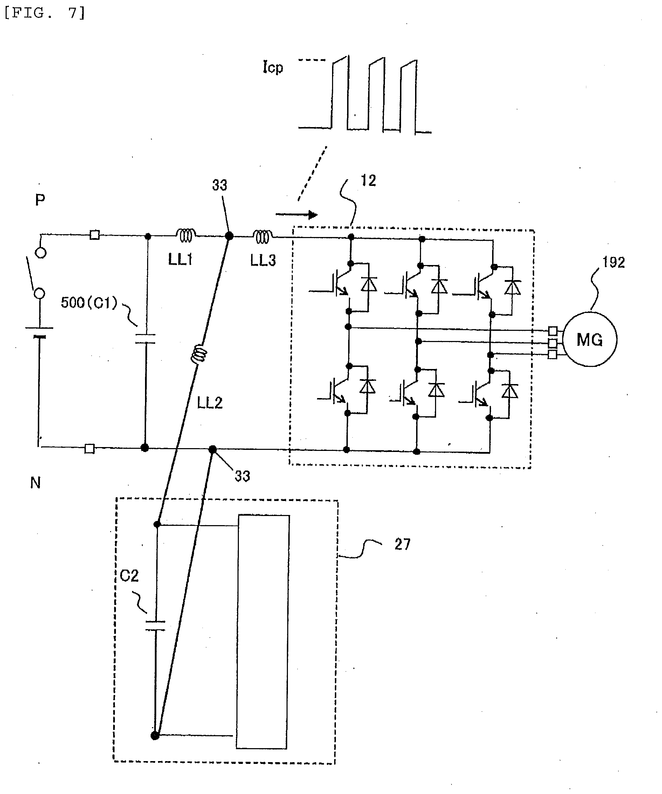

Here, as shown in Fig. 7, a current flowing from the voltage smoothing capacitor 500 into the inverter circuit 12 has a pulse-like current waveform with the same peak as a motor current. If the motor current is 300 Arms, the inflow current also has the same peak current of 420A as the motor current, and the frequency is twice the carrier frequency. The rising and falling of the current waveform is the same as the rising and falling waveform of the switching current of the power semiconductor element of the inverter circuit 12, and the current has an abrupt change of, for example, 2 kA/$\mu$S. At this time, a large current of AC component with an amplitude of 420 Ap/2 flows through the capacitor 500.

In an electrical circuit, since the input capacitor C2 (capacitance is also made C2) of the driver power supply circuit 27 is connected in parallel to the voltage smoothing capacitor 500 (capacitance is made C1), a current is drawn also from the capacitor C2 into the inverter circuit 12. The current value of the inflow current is determined by the ratio of impedance $\sqrt{(\omega LL1 - 1/(\omega C1)^2}$ of the capacitor 500 (C1) and inductance LL1 from the capacitor 500 to the connection part 33 of the capacitor bus bar 31 to impedance $\sqrt{(\omega LL2 - 1)/(\omega C2)^2}$ of the input capacitor C2 of the driver power supply circuit 27 and inductance LL2 of the power supply harness 34. If the latter impedance is about ten times the former impedance, at the time of the motor current peak of 420A, in the input capacitor C2 of the driver power supply circuit 27, a current of 21 Ap (= 420A•1/10•1/2) flows through the input capacitor C2. Incidentally, LL3 of Fig. 7 denotes inductance of the laminate bus bar 32.

Actually, the frequency of the current flowing into the inverter circuit 12 from the capacitor 500 roughly includes several kHz of carrier frequency component and several MHz of rising and falling. The component of several kHz is dominated by the ratio of the capacitances (C1 and C2) of the capacitors 500 and C2, and the component of several MHz is dominated by the ratio of the inductances LL1 and LL2. The capacitor C2 is mounted on the driver circuit board 17 in order to smooth the voltage of the driver power supply circuit 27, has the capacitance of about 200 nF, and includes eight small high-voltage capacitors connected in parallel. Thus, the allowable ripple current is several A, and if impedance matching to the capacitor 500 (C1) is inappropriate, a current larger than the allowable ripple current flows through the input capacitor C2 and this is a problem.

With respect to the current component of several kHz flowing into the inverter circuit 12, since the capacitance C2 (about 200 nF) is sufficiently smaller than the capacitance C1 (about 1000 $\mu$F), the inflow ripple current is as small as about 1/5000 and there is no problem. However, with respect to the component of several MHz, in the case of LL1 = LL2 = 10 nH, even if the ratio of the capacitances C1 and C2 is about 1/5000, the impedance ratio is about two, and the ripple current of the input capacitor C2 becomes large and this is a problem.

In this embodiment, the impedance of the capacitance C2 and the inductance LL2 is made 20 or more times larger than the impedance of the capacitance C1 and the inductance LL1, so that the ripple current of the input capacitor C2 at the high frequency of several MHz is suppressed, and the problem of the allowable ripple is solved. That is, setting is performed as in the following expression (1)

$$\sqrt{(\omega LL2 - 1)(\omega C2)^2)} / \sqrt{(\omega LL1 - 1)/(\omega C1)^2} > 20 \ \ldots \ (1)$$

Next, heat radiation measures of the switching transistor T1 of the driver power supply circuit 27 will be described. Loss in the driver circuit board 17 is divided into losses of the driver circuits 21 of the respective phases and loss of the driver power supply circuit 27. If the resistors R10 and R20 are not provided, most of the loss of the driver power supply circuit 27 is the loss of the switching transistor T1. In this embodiment, since the switching transistor T1 receives high voltage and performs switching, the loss thereof is large as compared with the switching transistor of the switching power supply, to which voltage is inputted from the 12V power supply 19.

In the case of a vehicle inverter device, since the use environment temperature is high, the inverter inside temperature can exceed 100°C. Then, in order to suppress the junction temperature of the switching transistor T1 to an allowable value or less, two following heat radiation measures are taken.

In the switching transistor T1, a heat radiation surface is a surface-mounted part of the drain terminal. Although the drain pattern has only to be wired to the second pin of the power supply transformer L1, heat radiation only by that is insufficient. Then, the drain pattern (area denoted by character D) is extended to the right side in Fig. 6 from the third pin of the power supply transformer L1, and is extended, with respect to a lower direction in the drawing, within a range where insulation from the FB line is secured, and the heat radiation area is further enlarged.

Further, checker chips J1 made of tubular metal members are arranged around the switching transistor T1, and the heat radiation area in the vicinity of the switching transistor T1 is enlarged to further improve the heat radiation performance, so that the switching transistor T1 can be used within the allowable temperature. Incidentally, the number of the checker chips J1 may be suitably set according to the area of the drain pattern D. By the heat radiation measures as described above, the switching transistor T1 is miniaturized, and the driver power supply circuit 27 to which the high voltage is inputted can be mounted in a limited range of the driver circuit board 17..

As described above, in the first embodiment, since both the rapid discharge control circuit 24 and the discharge mechanism using the power consumption of the driver circuit board 17 are used, even if the rapid discharge control circuit 24 goes wrong, the electric charge of the voltage smoothing capacitor 500 can be certainly discharged by the discharge mechanism of the driver circuit board 17, and the reliability of the discharge control can be improved.

Incidentally, in the discharge by the rapid discharge control circuit 24 using the discharge resistor 26, the discharge can be generally performed to 42V in several seconds although the time depends on the resistance value of the discharge resistor 26. On the other hand, in the discharge by the power consumption of the driver circuit board 17, it takes several tens seconds to discharge the residual electric charge of the voltage smoothing capacitor 500 to 42V. Thus, if the discharge by the rapid discharge control circuit 24 and the discharge by the power consumption of the driver circuit board 17 are simultaneously performed, the discharge by the rapid discharge control circuit 24 is main.

Second Embodiment

In the first embodiment, both the rapid discharge control circuit 24 and the discharge mechanism using the power consumption of the driver circuit board 17 are always used. However, in the second embodiment, the discharge mechanism by the driver circuit board 17 is performed only when the discharge by the rapid discharge control circuit 24 can not be normally performed.

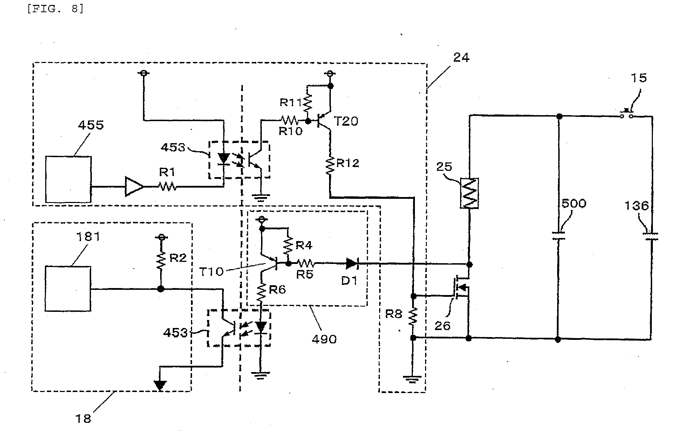

Fig. 8 is a view for explaining the second embodiment. In the example shown in Fig.' 8, a discharging switching element voltage detection circuit 490 for detecting a voltage at both ends of a discharging switching element 26 is provided, and whether or not discharge by a rapid discharge control circuit 24 is normally performed is detected based on an output signal of the discharging switching element voltage detection circuit 490.

The rapid discharge control circuit 24 includes a microcomputer (hereinafter referred to as micon) 455, and when receiving a discharge command from a controller 18, the micon 455 generates a discharge signal. The discharge signal is transmitted to a transistor T20 side through an insulated transmission element 453 such as a photo coupler, and the transistor T20 is turned on. When the transistor T20 is turned on, a gate voltage is applied to the discharging switching element 26, and the discharging switching element 26 is turned on. As a result, a capacitor 500 is discharged through a rapid discharge resistor 25.

The discharging switching element voltage detection circuit 490 includes a transistor T10, a diode D1, and resistors R4, R5 and R6. At the time of execution of discharge, the discharging switching element 26 is turned on, the voltage at both ends of the discharging switching element 26 is detected and the transistor T10 is turned on. Thus, the insulated transmission element 453 connected in series to the transistor T10 is also turned on, and Low signal is inputted to a micon 181 of the controller 18.

On the other hand, when discharge is not performed, since the discharging switching element 26 is off, the transistor T10 and the insulated transmission element 453 are also turned off. Accordingly, High signal obtained by rippling up the power supply voltage of the controller 18 by a resistor R2 is inputted to the micon 181. The controller 18 can determine, based on the High and Low signals, whether or not the discharge is normally performed.

That is, if the discharging switching element 26 is in the off state although the contactor off command is inputted to the controller 18 from the host controller 454 or although opening of the interlock loop 20 is detected, it is conceivable that the rapid discharge control circuit 24 to perform the on and off control of the discharging switching element 26 does not normally operate, or the discharging switching element 26 does not normally operate.. In any case, when determining that the contactor off command is inputted and the discharging switching element is off, the controller 18 activates the discharge function using the power consumption of the driver circuit board 17 and discharges the electric charge of the capacitor 500.

When the discharge is performed by the rapid discharge control circuit 24, since the temperature of the rapid discharge resistor 25 after the discharge rises, a specific time interval is required before next discharge. Thus, when an ignition key is continuously turned on and off, it is necessary to stop the rapid discharge function by using a timer or the like so that the temperature of the rapid discharge resistor 25 rises excessively. Alternatively, as shown in Fig. 2, a temperature sensor 23 to detect the temperature of the rapid discharge resistor 25 is provided, and if the detected temperature of the temperature sensor 23 exceeds an upper limit temperature, the rapid discharge control circuit 24 stops the discharge.

According to the invention, as described above, if the discharge by the rapid discharge control circuit 24 is not performed by some reason, the discharge of the capacitor 500 is performed by the power consumption of the driver circuit board 17. Thus, even when the rapid discharge function is stopped due to the temperature rise of the rapid discharge resistor 25 at the time of continuous key on and off, the discharge by the power consumption of the driver circuit board 17 is performed, so that the safety of the inverter device against electric shock can be raised.

As stated above, the power conversion device (inverter device 140) of the embodiment includes the inverter circuit 12 that includes the bridge-connected power semiconductor element and is connected to the DC power supply through the openable and closable contactor 15, the driver circuit 21 to drive the power semiconductor element, the controller 18, as the driver circuit control part, that performs PWM (Pulse Width Modulation) control on the driver circuit 21 and causes the power semiconductor element to perform the switching operation, and the voltage smoothing capacitor 500 connected in parallel to the input side of the inverter circuit 12. The capacitor 500 is connected in parallel to the discharge circuit in which the rapid discharge resistor 25 and the discharging switching element 26 are connected in series to each other. A discharge mechanism is provided which turns on the discharging switching element 26 by the rapid discharge control circuit 24 when the contactor 15 is placed in the open state, and the driver power supply circuit 27 is provided which is connected in parallel to the capacitor 500 and is inputted with the voltage applied to the capacitor 500. Thus, the residual electric charge of the capacitor 500 is discharged also by the driver power supply circuit 27 and the driver circuit 21 to which electric power is supplied by the driver power supply circuit 27. As a result, the capacitor 500 can be certainly discharged when the contactor is off, and the reliability on the discharge of the capacitor 500 is improved.

Besides, when the contactor 15 is placed in the open state, the PWM control is performed on the driver circuit 21 so that current does not flow through the power semiconductor element of the inverter circuit 12, and consequently, the power consumption of the driver circuit 21 at the time of capacitor discharge is increased, and the discharge time can be shortened.

The discharging switching element voltage detection circuit 490, as the discharge detection part, detects whether discharge by the rapid discharge resistor 25 is normally performed. If the contactor 15 is in the open state and the discharging switching element voltage detection circuit 490 detects that the discharge by the rapid discharge resistor 25 is not normally performed, the PWM control is performed so that current does not flow through the power semiconductor element. As a result, even if the discharge by the rapid discharge resistor 25 is not performed by failure of the rapid discharge control circuit 24, the electric charge of the capacitor 500 can be discharged by the power consumption in the driver circuit board 17.

Besides, the temperature sensor 23 to detect the temperature of the rapid discharge resistor 25 is further provided, and if the temperature detected by the temperature sensor 23 exceeds a specific upper limit temperature, the discharge by the rapid discharge resistor 25 is stopped, and the PWM control is performed so that current does not flow through the power semiconductor element. Thus, even when the temperature sensor 23 exceeds the upper limit temperature, the discharge of the capacitor 500 can be certainly performed.

Besides, the temperature sensor 29 to detect the temperature (temperature of the driver circuit 21) in the power conversion device is provided, and the setting of the carrier frequency in the PWM control is changed based on the detected temperature of the temperature sensor 29. Thus, the discharge operation can be performed so that the temperature in the power conversion device does not exceed the allowable temperature.

The resistor R10, R20 for discharge power consumption is provided in parallel to the driver circuit 21 on the secondary side of the driver power supply circuit 27. Thus, the power consumption when the switching operation by the driver circuit 21 is not performed can be increased, and the discharge time can be shortened.

Besides, as shown in Fig. 7, the input capacitor C2 connected in parallel to the voltage smoothing capacitor 500 is provided in the input part of the driver power supply circuit 27, and the impedance of the wiring from the connection part 33 of the capacitor 500 to the input capacitor C2 and the input capacitor C2 is set to be 20 or more times larger than the impedance of the wiring from the connection part 33 to the capacitor 500 and the capacitor 500. Thus, the ripple current' of the input capacitor C2 at the high frequency of several MHz is suppressed, and the problem of the allowable ripple can be solved.

Besides, the driver power supply circuit 27 includes the switching transistor T1 and the power supply transformer L1 mounted on the printed board, and the drain pattern D as the wiring pattern to connect one terminal of the switching transistor T1 to one terminal of the power supply transformer L1 is the planar pattern widening in the lower area of the power supply transformer L1 of the printed board. Thus, the heat radiation performance of the switching transistor T is improved. Further, at least one checker chip J1 is arranged in the vicinity of the transistor T1 on the drain pattern D, so that the heat radiation performance can be further improved.

**Claims**

1. A power conversion device (200) comprising:

   - an inverter circuit (12) that includes a bridge-connected power semiconductor element and is connected to a DC power supply through an openable and closable contactor (15);
   - a driver circuit (21) to drive the power semiconductor element;
   - a driver circuit control part (18) that performs Pulse Width Modulation, PWM, control on the driver circuit (21) and causes the power semiconductor element to perform a switching operation;
   - a voltage smoothing capacitor (500) connected in parallel to an input side of the inverter circuit (12);
   - a driver power supply circuit (27) that is connected in parallel to the voltage smoothing capacitor (500), is inputted with a voltage applied to the voltage smoothing capacitor (500) and supplies electric power to the driver circuit (21), wherein a discharge power consuming resistor (R10) is provided at a secondary side of the driver power supply circuit (27) and in parallel to the driver circuit (21);
   - a discharge circuit (24) that includes a resistor (25) for discharging an electric charge of the voltage smoothing capacitor and a discharging switching element connected in series to the resistor (25), and is connected in parallel to the voltage smoothing capacitor (500); and
   - a discharge control part that turns on the discharging switching element when the contactor (15) is placed in an open state and causes the discharge circuit (24) to discharge.

2. The power conversion device (200) according to claim 1, wherein
   if the contactor (15) is placed in the open state, the driver circuit control part (18) performs non-energization PWM control on the driver circuit (21).

3. The power conversion device (200) according to claim 2, further comprising:

   a discharge detection part to detect whether the discharge of the discharge circuit (24) is normally performed, wherein
   if the contactor (15) is placed in the open state and the discharge detection part detects that the discharge of the discharge circuit (24) is not normally performed, the driver circuit control part (18) performs the non-energization PWM control on the driver circuit (21).

4. The power conversion device (200) according to claim 2, further comprising:

   a resistor temperature sensor to detect temperature of the resistor, wherein
   if the temperature detected by the resistor temperature sensor exceeds a specified upper limit temperature, the discharge control part stops the discharge of the discharge circuit (24) even if the contactor (15) is in the open state, and if the contactor (15) is placed in the open state and the temperature detected by the resistor temperature sensor exceeds the specified upper limit temperature, the driver circuit control part (18) performs the non-energization PWM control on the driver circuit (21).

5. The power conversion device (200) according to any one of claim 2 to 4, further comprising:

an in-device temperature sensor to detect temperature in the power conversion device (200), wherein the driver circuit control part (18) changes setting of a carrier frequency in the non-energization PWM control based on the detected temperature of the in-device temperature sensor.

6. The power conversion device (200) according to any one of claim 1 to 5, wherein an input capacitor connected in parallel to the voltage smoothing capacitor (500) is provided in an input part of the driver power supply circuit, and an impedance of a wiring from a connection part of the voltage smoothing capacitor (500) to the input capacitor and the input capacitor is set to be 20 or more times larger than an impedance of a wiring from the connection part to the voltage smoothing capacitor (500) and the voltage smoothing capacitor.

7. The power conversion device (200) according to any one of claim 1 to 6, wherein the driver power supply circuit (27) includes a switching transistor and a transformer mounted on a printed board, and a wiring pattern to connect one terminal of the transistor to one terminal of the transformer is a planar pattern widening in a lower area of the transformer of the printed board.

8. The power conversion device (200) according to claim 7, wherein at least one checker chip is arranged on the wiring pattern and in a vicinity of the transistor.


**Patentansprüche**

1. Leistungsumsetzungsvorrichtung (200), die Folgendes umfasst:

- eine Wechselrichterschaltung (12), die ein Leistungshalbleiterelement in Brückenschaltung enthält und mit einer Gleichstromversorgung durch einen Kontaktschalter (15), der geöffnet und geschlossen werden kann, verbunden ist;
- eine Ansteuerschaltung (21), um das Leistungshalbleiterelement zu anzusteuern;
- ein Ansteuerschaltungs-Steuerteil (18), das eine Pulsbreitenmodulation-Steuerung (PWM-Steuerung) an der Ansteuerschaltung (21) durchführt und das Leistungshalbleiterelement veranlasst, einen Schaltvorgang durchzuführen;
- einen Spannungsglättungskondensator (500), der parallel zu einer Eingangsseite der Wechselrichterschaltung (12) geschaltet ist;
- eine Ansteuerungs-Stromversorgungsschaltung (27), die parallel zu dem Spannungsglättungskondensator (500) geschaltet ist, an die eine Spannung angelegt wird, die an den Spannungsglättungskondensator (500) angelegt wird, und die die Ansteuerschaltung (21) mit elektrischer Leistung versorgt, wobei ein einen Entladestrom verbrauchender Widerstand (R10) an einer sekundären Seite der Ansteuerungs-Stromversorgungsschaltung (27) und parallel zu der Ansteuerschaltung (21) vorgesehen ist;
- eine Entladungsschaltung (24), die einen Widerstand (25) zum Entladen einer elektrischen Ladung des Spannungsglättungskondensators und ein entladendes Schaltelement, das in Reihe mit dem Widerstand (25) geschaltet ist, enthält und parallel zu dem Spannungsglättungskondensator (500) geschaltet ist; und
- ein Entladungssteuerteil, das das entladende Schaltelement einschaltet, wenn der Kontaktschalter (15) in einen offenen Zustand gebracht wird und die Entladungsschaltung (24) zum Entladen veranlasst.

2. Leistungsumsetzungsvorrichtung (200) nach Anspruch 1, wobei dann, wenn der Kontaktschalter (15) in einen offenen Zustand gebracht wird, das Ansteuerschaltungs-Steuerteil (18) Nicht-Erregungs-PWM-Steuerung auf der Ansteuerschaltung (21) durchführt.

3. Leistungsumsetzungsvorrichtung (200) nach Anspruch 2, die ferner Folgendes umfasst:

ein Entladungsdetektionsteil, um zu detektieren, ob die Entladung der Entladungsschaltung (24) normal durch-

EP 2 566 032 B1

geführt wird, wobei dann,
wenn der Kontaktschalter (15) in einen offenen Zustand gebracht wird und das Entladungsdetektionsteil detektiert, dass die Entladung der Entladungsschaltung (24) nicht normal durchgeführt wird, das Ansteuerschaltungs-Steuerteil (18) die Nicht-Erregungs-PWM-Steuerung auf der Ansteuerschaltung (21) durchführt.

4. Leistungsumsetzungsvorrichtung (200) nach Anspruch 2, die ferner Folgendes umfasst:

einen Widerstandstemperatursensor, um die Temperatur des Widerstands zu detektieren, wobei dann,
wenn die von dem Widerstandstemperatursensor detektierte Temperatur eine bestimmte obere Grenztemperatur übersteigt, das Entladungsdetektionsteil das Entladen der Entladungsschaltung (24) beendet, auch wenn sich der Kontaktschalter (15) in dem offenen Zustand befindet, und dann, wenn der Kontaktschalter (15) in den offenen Zustand gebracht wird und die von dem Widerstandstemperatursensor detektierte Temperatur die bestimmte obere Grenztemperatur übersteigt, das Ansteuerschaltungs-Steuerteil (18) die Nicht-Erregungs-PWM-Steuerung auf der Ansteuerschaltung (21) durchführt.

5. Leistungsumsetzungsvorrichtung (200) nach einem der Ansprüche 2 bis 4, die ferner Folgendes umfasst:

einen sich in der Vorrichtung befindenden Temperatursensor, um die Temperatur in der Leistungsumsetzungsvorrichtung (200) zu detektieren, wobei
das Ansteuerschaltungs-Steuerteil (18) die Einstellung einer Trägerfrequenz in der Nicht-Erregungs-PWM-Steuerung basierend auf der von dem sich in der Vorrichtung befindenden Temperatursensor detektierten Temperatur verändert.

6. Leistungsumsetzungsvorrichtung (200) nach einem der Ansprüche 1 bis 5, wobei
ein Eingangskondensator, der parallel zu dem Spannungsglättungskondensator (500) geschaltet ist, an einem Eingangsteil der Ansteuerungs-Stromversorgungsschaltung vorgesehen ist, und
eine Impedanz einer Verdrahtung von einem Verbindungsteil des Spannungsglättungskondensators (500) zu dem Eingangskondensator und der Eingangskondensator derart eingestellt ist, dass sie 20 oder mehr als 20 mal größer als eine Impedanz einer Verdrahtung von dem Verbindungsteil zu dem Spannungsglättungskondensator (500) und dem Spannungsglättungskondensator ist.

7. Leistungsumsetzungsvorrichtung (200) nach einem der Ansprüche 1 bis 6, wobei
die Ansteuerungs-Stromversorgungsschaltung (27) einen Schalttransistor und einen Transformator, der auf einer Leiterplatte montiert ist, enthält, und
ein Verdrahtungsmuster, um einen Anschluss des Transistors mit einem Anschluss des Transformators zu verbinden, einem ebenen Muster entspricht, das sich in einem unteren Bereich des Transformators auf der Leiterplatte verbreitert.

8. Leistungsumsetzungsvorrichtung (200) nach Anspruch 7, wobei
mindestens ein Prüfer-Chip auf dem Verdrahtungsmuster und in einer Nähe des Transistors angeordnet ist.

**Revendications**

1. Dispositif de conversion de puissance (200) comprenant :

- un circuit onduleur (12) qui inclut un élément à semi-conducteurs de puissance connectés en pont et qui est connecté à une alimentation en courant continu par l'intermédiaire d'un contacteur pouvant être ouvert et fermé (15) ;
- un circuit d'attaque (21) pour attaquer l'élément à semi-conducteurs de puissance ;
- une partie de commande de circuit d'attaque (18) qui effectue une commande par modulation de largeur d'impulsion, PWM, sur le circuit d'attaque (21) et fait effectuer à l'élément à semi-conducteurs de puissance une opération de commutation ;
- un condensateur de lissage de tension (500) connecté en parallèle à un côté entrée du circuit onduleur (12) ;
- un circuit d'alimentation de circuit d'attaque (27) qui est connecté en parallèle au condensateur de lissage de tension (500), reçoit en entrée une tension appliquée au condensateur de lissage de tension (500) et fournit de l'énergie électrique au circuit d'attaque (21), dans lequel une résistance consommatrice d'énergie de décharge (R10) est prévue sur un côté secondaire du circuit d'alimentation de circuit d'attaque (27) et en parallèle au circuit d'attaque (21) ;
- un circuit de décharge (24) qui inclut une résistance (25) pour décharger une charge électrique du condensateur de lissage de tension et un élément de commutation de décharge connecté en série avec la résistance (25), et qui est connecté en parallèle au condensateur de lissage de tension (500) ; et
- une partie de commande de décharge qui active l'élément de commutation de décharge lorsque le contacteur (15) est placé dans un état ouvert et provoque la décharge du circuit de décharge (24).

2. Dispositif de conversion de puissance (200) selon la revendication 1, dans lequel,
si le contacteur (15) est placé dans l'état ouvert, la partie de commande de circuit d'attaque (18) effectue une commande PWM de non-énergisation sur le circuit d'attaque (21).

3. Dispositif de conversion de puissance (200) selon la revendication 2, comprenant en outre :

une partie de détection de décharge pour détecter si la décharge du circuit de décharge (24) est effectuée normalement, dans lequel
si le contacteur (15) est placé dans l'état ouvert et que la partie de détection de décharge détecte que la décharge du circuit de décharge (24) n'est pas effectuée normalement, la partie de commande de circuit d'attaque (18) effectue la commande PWM de non-énergisation sur le circuit d'attaque (21).

4. Dispositif de conversion de puissance (200) selon la revendication 2, comprenant en outre :

un capteur de température de résistance pour détecter la température de la résistance, dans lequel
si la température détectée par le capteur de température de résistance dépasse une température limite supérieure spécifiée, la partie de commande de décharge arrête la décharge du circuit de décharge (24) même si le contacteur (15) est dans l'état ouvert, et si le contacteur (15) est placé dans l'état ouvert et que la température détectée par le capteur de température de résistance dépasse la température limite supérieure spécifiée, la partie de commande de circuit d'attaque (18) effectue la commande PWM de non-énergisation sur le circuit d'attaque (21).

5. Dispositif de conversion de puissance (200) selon l'une quelconque des revendications 2 à 4, comprenant en outre :

un capteur de température intra-dispositif pour détecter la température dans le dispositif de conversion de puissance (200), dans lequel
la partie de commande de circuit d'attaque (18) modifie le réglage d'une fréquence porteuse dans la commande PWM de non-énergisation sur la base de la température détectée par le capteur de température intra-dispositif.

6. Dispositif de conversion de puissance (200) selon l'une quelconque des revendications 1 à 5, dans lequel
un condensateur d'entrée connecté en parallèle au condensateur de lissage de tension (500) est prévu dans une partie d'entrée du circuit d'alimentation de circuit d'attaque et
une impédance d'un câblage depuis une partie de connexion du condensateur de lissage de tension (500) au condensateur d'entrée et du condensateur d'entrée est réglée pour être 20 fois ou plus supérieure à une impédance d'un câblage depuis la partie de connexion au condensateur de lissage de tension (500) et du condensateur de lissage de tension.

7. Dispositif de conversion de puissance (200) selon l'une quelconque des revendications 1 à 6, dans lequel
le circuit d'alimentation de circuit d'attaque (27) inclut un transistor de commutation et un transformateur monté sur une carte imprimée, et
un motif de câblage pour connecter une borne du transistor à une borne du transformateur est un motif plan qui s'élargit dans une zone inférieure du transformateur de la carte imprimée.

8. Dispositif de conversion de puissance (200) selon la revendication 7, dans lequel
au moins une puce de contrôle est disposée sur le motif de câblage et à proximité du transistor.

[FIG. 1]

[FIG. 2]

[FIG. 3]

[FIG. 4]

START

S10 CONTACTOR OFF → NO

YES

S20 INVERTER INSIDE TEMPERATURE > 85 °C → NO

YES

S30 NON-ENERGIZATION PWM CONTROL fc = 7 kHz

S40 NON-ENERGIZATION PWM CONTROL fc = 12 kHz

NO S50 CAPACITOR VOLTAGE < 42V

YES

S60 CONTROLLER SELF SHUT OFF

END

[FIG. 5]

[FIG. 6]

[FIG. 7]

[FIG. 8]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006042459 A
- EP 2284982 A1
- US 2007274109 A1
- EP 2151913 A2